# FASCICULE DE BREVET EUROPEEN

(11) **EP 2 451 684 B1**
(45) Date de publication et mention de la délivrance du brevet: **04.09.2013**
(21) Numéro de dépôt: 10742193.5
(22) Date de dépôt: 05.07.2010
(51) Int. Cl.: B60T 8/1755, B60T 8/88

(54) **PROCEDE ET DISPOSITIF DE DETECTION D'UNE SITUATION DE TRANSPORT D'UN VEHICULE EN MODE VEILLE, ET VEHICULE EQUIPE D'UN TEL DISPOSITIF**
VERFAHREN UND VORRICHTUNG ZUR ERKENNUNG EINER TRANSPORTSITUATION EINES FAHRZEUGS IM PARKMODUS UND MIT EINER DERARTIGEN VORRICHTUNG AUSGESTATTETES FAHRZEUG
METHOD AND DEVICE FOR THE DETECTION OF A TRANSPORTED SITUATION OF A VEHICLE IN STANDBY MODE, AND VEHICLE EQUIPPED WITH SUCH A DEVICE

(30) Priorité: 06.07.2009 FR 0954652
(43) Date de publication de la demande: 16.05.2012
(73) Titulaire: Renault S.A.S., 78288 Guyancourt Cedex (FR)
(72) Inventeur: BRUNOU, Alfred, F-28500 Saint-Gemme-Moronval (FR); NICOLLE, Stéphane, F-78180 Montigny-le-Bretonneux (FR)
(86) Numéro de dépôt international: PCT/FR2010/051408
(87) Numéro de publication internationale: WO 2011/004107

(56) Documents cités:
- EP-A1- 1 927 861
- WO-A1-2008/003533
- DE-A1- 19 822 014
- DE-A1-102005 015 062
- DE-A1-102005 045 998
- FR-A1- 2 845 335
- FR-A1- 2 906 515

## Description

L'invention concerne un procédé et dispositif de détection d'une situation de transport d'un véhicule en mode veille, et un véhicule équipé d'un tel dispositif.

Lorsqu'un véhicule immobilisé est en mode veille, un système surveille l'activité des capteurs de vitesse de roue afin de s'assurer, entre autre, de la bonne immobilisation du véhicule avant l'endormissement de ce dernier. Lorsque le véhicule est équipé d'un système de contrôle de trajectoire, par exemple de type E.S.C. (contrôle de la stabilité du véhicule) et lorsque des mouvements sont détectés via les capteurs de vitesse de roue, le dit système de contrôle de trajectoire informe le dispositif d'immobilisation en conséquence : induisant soit une immobilisation du véhicule au moyen d'une augmentation des efforts de serrage du dispositif d'immobilisation (frein de parking) soit des alertes/défauts dédiées. Cette surveillance indispensable atteint ses limites lors d'un transport, où le véhicule peut sembler se déplacer par rapport au support de transport sans pour autant se déplacer réellement. En effet, lors du transport, des activités parasites des capteurs de vitesse de roue peuvent être engendrées à tord et ainsi le dispositif d'immobilisation peut être amené à augmenter les efforts de serrage du dispositif d'immobilisation, pouvant ainsi mener à des défauts nécessitant une intervention technique par diagnostic.

Un procédé et un dispositif ayant les caractéristiques des préambules des revendications 1 et 6 respectivement sont connus du document FR 2 845 335 A1.

L'objet de l'invention est donc d'éviter des actions de serrage inutiles du dispositif d'immobilisation et/ou des alertes ou défauts intempestifs d'un véhicule suite à une situation de transport.

Il est proposé selon l'invention un procédé de détection d'une situation du transport d'un véhicule en mode veille, le véhicule comportant un dispositif de contrôle de trajectoire, des capteurs de vitesse de roue et un capteur de vitesse de lacet de véhicule reliés audit dispositif de contrôle de trajectoire du véhicule, et une unité de traitement des informations détectées, de type ordinateur de bord, gérant notamment des modes de fonctionnement du véhicule, tels que véhicule endormi, en veille, prêt à démarrer, en démarrage, moteur démarré, caractérisé en ce qu'il comprend les étapes suivantes :
- détecter un mode de fonctionnement en veille du véhicule, à l'arrêt suite à l'installation du véhicule fixé sur un support de transport,
- détecter une vitesse du véhicule nulle, relevée par les capteurs de vitesse de roue du véhicule suite à ladite installation du véhicule sur le support de transport, le capteur de vitesse d'au moins une roue du véhicule étant en limite d'oscillation sur une période de temps prédéfinie,
- détecter une vitesse de lacet non nulle du véhicule relevée par le capteur de vitesse de lacet du véhicule, correspondant à un léger mouvement relatif du véhicule fixé sur son support, sur une période de temps prédéfinie,
- déterminer dans ces conditions un mode de transport du véhicule, dans lequel ledit dispositif de contrôle de trajectoire commande le filtrage des informations d'au moins le capteur de vitesse de roue du véhicule, et
- permettre la sortie du mode de transport du véhicule.

Le procédé s'applique à diverses situations de transport du véhicule et par exemple à un transport routier sur camion, au transport ferroviaire, au transport sur ferry, à une mise en fourrière etc., et permet dans cette situation de transport de disposer le véhicule dans un mode inhibant la surveillance de déplacement minime du véhicule sur son support de transport et évitant ainsi sa mise en défaut.

Naturellement, le mode veille du véhicule subsiste pendant une période de temps déterminée après arrêt du véhicule. La dite période de temps peut être de l'ordre de quelques minutes à soixante minutes.

Ladite période de temps prédéfinie de détection de la vitesse nulle du véhicule est de l'ordre de quelques secondes, par exemple de une à trois secondes.

Ladite période de temps prédéfinie de la vitesse de lacet non nulle du véhicule est de l'ordre de la seconde, voire quelques secondes, par exemple de une à plusieurs secondes, et peut être sensiblement la même que celle de la détection de la vitesse nulle du véhicule. Ladite période de temps peut correspondre à une situation de transport en virage du véhicule.

Le dispositif de détection d'une situation de transport d'un véhicule en veille pour la mise en oeuvre du procédé défini précédemment comprend des capteurs de vitesse de roue du véhicule, un capteur de vitesse de lacet du véhicule, un dispositif de contrôle de trajectoire du véhicule, par exemple de type E.S.C. (contrôle de la stabilité du véhicule), une unité de traitement des informations de type ordinateur de bord du véhicule apte à gérer notamment des modes de fonctionnement du véhicule, tels que véhicule endormi, en veille, prêt à démarrer, en démarrage, moteur démarré, et est caractérisé en ce qu'il comporte des moyens aptes à disposer le véhicule dans un mode de transport dans lequel les informations d'au moins un capteur de vitesse de roue de vitesse et en limite d'oscillation sont filtrées, et à permettre le réveil du véhicule, par exemple à une ouverture de porte ou à un déplacement de celui-ci etc.

Lesdits moyens aptes à disposer le véhicule en mode de transport sont avantageusement un élément de logiciel ajouté au logiciel du dispositif de contrôle de trajectoire du véhicule.

L'invention concerne également un véhicule comprenant un dispositif de détection d'une situation de transport d'un véhicule en veille tel que précité.

L'invention est illustrée ci-après à l'aide d'un exemple de réalisation non limitatif de l'invention et en référence au dessin annexé dans lequel :
La figure 1 est une vue schématique des composants d'un dispositif de détection d'une situation de transport d'un véhicule automobile selon l'invention,
La figure 2 est une vue en élévation d'un véhicule automobile selon l'invention en situation de transport sur un plateau d'un véhicule de transport, et
La figure 3 est un graphe des signaux des capteurs de vitesse de roue et de vitesse de lacet, et du déplacement du véhicule en situation de transport pour un véhicule automobile selon l'invention et un véhicule sans l'invention.

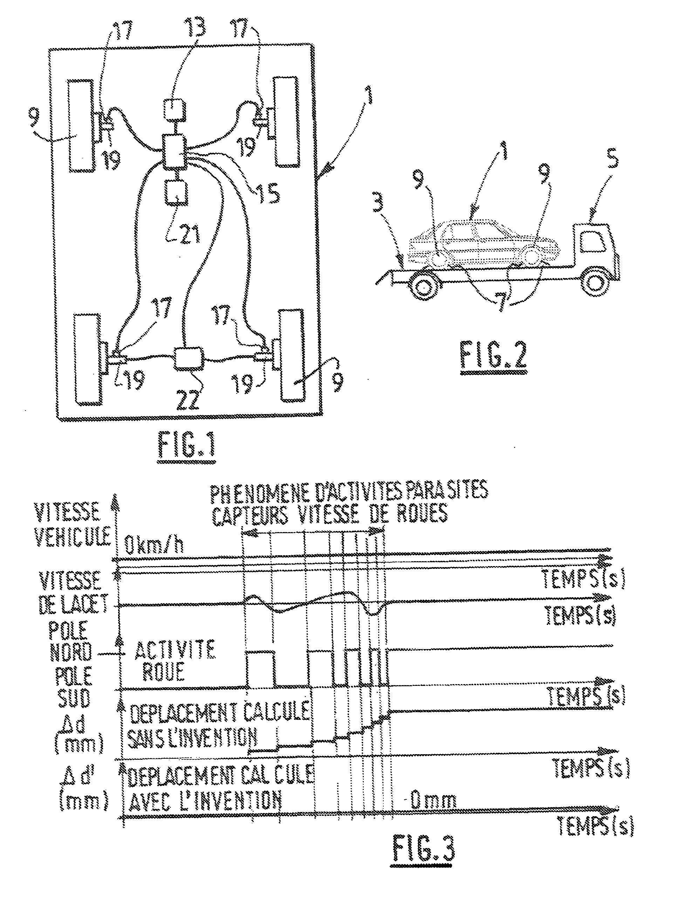

Avec référence au dessin et en particulier à la figure 2, on a représenté un véhicule automobile 1 selon l'invention en situation de transport. Ce véhicule est monté sur un plateau 3 de véhicule de transport 5, un camion, étant fixé à celui-ci au moyen de cales avant et arrière 7 positionnées contre ses roues 9 sur le plateau 3.

Outre le calage du véhicule, ce dernier est mis en situation de frein de parking, par le dispositif d'immobilisation du véhicule 22.

Au cours du transport, notamment lors des virages, le véhicule automobile 1 est amené à bouger légèrement sur le plateau 3 et notamment à supporter un mouvement de lacet, lequel est détecté par le capteur de vitesse de lacet 13 du véhicule (figure 1).

Ce véhicule automobile 1 est pourvu en outre d'un dispositif de contrôle de trajectoire du véhicule 15, de type E.S.C. (contrôle de la stabilité du véhicule). Le véhicule comprend également des capteurs de vitesse de roue 17 montés chacun sur un essieu de roue 19 du véhicule et reliés au dispositif de contrôle de trajectoire 15, lui-même relié à un ordinateur de bord 21 du véhicule ainsi qu'au dispositif d'immobilisation du véhicule 22. De même le capteur de vitesse de lacet 13, monté à l'intérieur du véhicule, est relié au dispositif de contrôle de trajectoire 15.

Il est possible dans cette situation de transport que l'un des capteurs de vitesse de roue 17 qui sont généralement de type à détection de pôles magnétique soit en limite d'oscillation entre deux pôles magnétiques distincts et successifs et que le léger mouvement du véhicule 1 calé sur le plateau 3 engendre sur ce capteur des impulsions qui correspondent à l'oscillation d'un pôle à l'autre au mouvement de la roue 9. Cette probabilité de limite d'oscillation d'un capteur de vitesse 17 pour une roue est faible, de l'ordre de 0,02 à 0,04, mais elle est non négligeable. Elle peut également concerner deux roues 9 du véhicule avec une probabilité très faible, de l'ordre de 0,0004, ou plus de deux roues 9.

Dans ce cas, pour un véhicule sans le dispositif de l'invention mais équipé d'un dispositif E.S.C. (contrôle de la stabilité du véhicule) 15, celui-ci informera, à tort, le dispositif d'immobilisation du véhicule 22 amenant ce dernier à produire des efforts de serrage de frein de parking jusqu'au serrage maximum, puis le véhicule semblant continuer à bouger sur son support au cours du transport engendrera de la part du dispositif d'immobilisation du véhicule 22 des défauts nécessitant une intervention technique par diagnostic.

L'invention apporte une solution à ce problème concernant les véhicules automobiles modernes en situation de transport.

L'invention concerne en effet les véhicules automobiles comportant (figure 1) des capteurs de vitesse de roue 17, un capteur 17 à chaque roue, un capteur de vitesse de lacet 13 du véhicule, un dispositif de contrôle de trajectoire du véhicule 15, de type E.S.C. (contrôle de la stabilité du véhicule), et une unité de traitement des informations 21 de type ordinateur de bord du véhicule. L'ordinateur de bord 21 est relié au dispositif de contrôle de trajectoire 15. Les capteurs de vitesse de roue 17 et le capteur de vitesse de lacet 13 sont reliés au dispositif de contrôle de trajectoire 15. L'ordinateur de bord 21 du véhicule est apte à gérer et à informer du fonctionnement du véhicule et notamment divers modes de fonctionnement de celui-ci, tels que mode de véhicule endormi où le véhicule est à l'arrêt avec ses éléments de contrôle éteints et à un mode d'alimentation électrique de veille, un mode de véhicule en veille où des éléments de contrôle essentiels, tels que la détection d'ouverture de porte, la détection du déplacement du véhicule etc. sont maintenus, un mode du véhicule prêt à démarrer où la carte de démarrage ou la clef de contact du véhicule sont détectés, un mode démarrage du moteur où la carte de démarrage ou la clef de contact sont activés, un mode moteur démarré où les fonctions de conduite et de contrôles correspondantes sont activées.

L'invention consiste à détecter pour un véhicule 1 en mode veille une situation de transport dans laquelle il peut arriver que au moins un capteur de vitesse de roue 17, lequel présente une probabilité de environ 0,02 ou deux, lesquels présentent une probabilité de environ 0,0004, est ou sont dans une situation de limite d'oscillation et donc générant un signal parasite à certains moments du transport, pendant des périodes de temps aléatoires. Le procédé selon l'invention consiste dans ces conditions reconnues par le dispositif E.S.C. (contrôle de la stabilité du véhicule) 15 à filtrer un éventuel signal de capteur de roue 17, qui pourrait venir dudit capteur de roue 17 en limite d'oscillation, ce filtrage étant commandé par le dispositif E.S.C. (contrôle de la stabilité du véhicule) 15 pour neutraliser lesdits signaux émis par ce capteur 17. Cette inhibition de signaux est réalisée au moyen d'une addition d'un élément de logiciel dans le programme de ce dispositif E.S.C. (contrôle de la stabilité du véhicule) 15.

La mise en oeuvre de l'invention est illustrée par un exemple de réalisation décrit ci-après.

Supposons qu'un opérateur monte un véhicule automobile moderne 1, équipé d'un ordinateur de bord 21, d'un dispositif E.S.C. (contrôle de la stabilité du véhicule) 15, de capteurs de vitesse de roue 17 et d'un capteur de vitesse de lacet 13 du véhicule sur un plateau 3 de véhicule de transport 5 tel que représenté en figure 1 et le fixe en position, par exemple au moyen de cales 7 sur le plateau support 3. Le véhicule 1 est maintenu en principe solidairement au plateau du véhicule de transport 5 et ne peut se déplacer relativement à celui-ci, sauf à être sollicité par les vibrations du transport et de très faibles mouvements relatifs sur le plateau 3 lors du transport. Le véhicule est en outre en veille pendant une période de temps variable, de quelques minutes à soixante minutes environ selon les conditions statiques du véhicule au moment de l'arrêt de celui-ci sur le plateau 3. L'opérateur démarre son véhicule de transport 5 et transporte le véhicule 1 dans cette période de veille du véhicule 1 ; le véhicule automobile transporté 1 sera contrôlé par son dispositif E.S.C. (contrôle de la stabilité du véhicule) 15 et notamment pour ses mouvements de déplacement et de lacet par les capteurs de vitesse de roue 17 et de vitesse de lacet 13 respectivement lors du transport.

Si un capteur de vitesse de roue 17 ou éventuellement deux capteurs de vitesse de roue 17 se trouve(nt) en limite d'oscillation, il peut arriver avec le très léger mouvement du véhicule automobile sur le plateau 3 que ce(s) capteur(s) de vitesse de roue 17 délivre(nt) un signal parasite de déplacement aux moments les plus turbulents du transport, par exemple sur une à plusieurs secondes, puis sur des périodes prolongées, par exemple de cinq à quinze minutes, où le transport est plus calme, il n'en délivre plus. Cette situation sera reconnue par le dispositif E.S.C. (contrôle de la stabilité du véhicule) 15 comme vitesse nulle du véhicule pendant ladite période de turbulence.

De plus, le capteur de vitesse de lacet 13 du véhicule 1 sera appelé à réagir lors du transport, notamment dans les situations de virage pour émettre un signal de vitesse de lacet non nulle du véhicule, ceci sur une faible période de temps correspondant au temps du virage, par exemple de une à plusieurs secondes. La détection du mouvement du lacet du véhicule et celle de la ou des roue(s) en limite d'oscillation de son capteur peuvent être synchrones mais ceci n'est pas nécessairement le cas.

Les conditions précitées seront reconnues par le dispositif E.S.C. (contrôle de la stabilité du véhicule) 15 dans la condition de mode veille reçue de l'ordinateur de bord 21 comme une situation de transport du véhicule automobile 1 et ainsi ledit signal du ou desdits capteur(s) de vitesse 17 en limite d'oscillation est filtré pour n'émettre aucun signal. Ainsi, le dispositif d'immobilisation 22 ne commande aucun serrage de frein de parking, ni une mise en défaut du véhicule, lors d'une situation de transport du véhicule, comme c'est le cas pour un véhicule non équipé de l'invention.

Cette situation est illustrée par la figure 3 où une comparaison graphique est relevée entre un véhicule 1 selon l'invention et un véhicule non équipé de l'invention en cours de transport.

Sur ce graphique sont exprimés en fonction du temps (selon l'abscisse) respectivement depuis le haut vers le bas, les signaux de vitesse du véhicule, de vitesse de lacet du véhicule, de vitesse d'un capteur de vitesse de roue 17 en limite d'oscillation magnétique, pôle Nord au pôle Sud adjacent, le déplacement Δd du véhicule 1 (en mm) calculé sans le dispositif de l'invention et le déplacement Δd' (en mm) calculé du véhicule avec le dispositif de l'invention.

Le graphique montre un épisode de transport turbulent sur une faible période de temps (quelques secondes) où on observe respectivement depuis le haut vers le bas une vitesse nulle du véhicule mais avec un phénomène d'activités parasites sur l'un au moins des capteurs de vitesse de roue 17 (celui en limite d'oscillation), une vitesse de lacet non nulle du véhicule dans la même période de temps, l'émission de signaux de vitesse d'une roue du capteur de vitesse en limite d'oscillation sur ladite période selon des signaux rectangles correspondant à l'alternance d'oscillation des pôles successifs du capteur de vitesse de roue 17, le déplacement Δd calculé correspondant d'un véhicule sans l'invention sur ladite période, et le déplacement Δd' calculé ramené à zéro sur ladite période d'un véhicule selon l'invention.

Naturellement, pour le véhicule non équipé de l'invention le déplacement calculé en escalier est traduit, à tort, comme un déplacement réel du véhicule, ce qui conduira à un resserrage des freins de parking puis à une mise en défaut du véhicule commandé par le dispositif d'immobilisation 22.

Dans le véhicule selon l'invention, le déplacement Δd' calculé étant ramené à zéro, il ne se passera rien, si ce n'est éventuellement le passage du mode veille du véhicule à un mode endormi après une certaine période de temps après que le mode transport ait été détecté, par exemple de dix à trente minutes.

Naturellement, à la fin de la situation de transport du véhicule, à l'ouverture d'une porte de celui-ci ou au réel déplacement de celui ci, le véhicule sort du mode de transport.

L'invention apporte ainsi un procédé et un dispositif simple de détection d'un véhicule en situation de transport, permettant d'empêcher une mise en défaut de celui-ci au cours de cette situation.

## Revendications

1. Procédé de détection d'une situation du transport d'un véhicule (1) en mode veille, le véhicule (1) comportant un dispositif de contrôle de trajectoire (15), des capteurs de vitesse de roue (17) et un capteur de vitesse de lacet (13) de véhicule reliés audit dispositif de contrôle de trajectoire (15) du véhicule, une unité de traitement (21) des informations détectées, de type ordinateur de bord, gérant notamment des modes de fonctionnement du véhicule, tels que véhicule endormi, en veille, prêt à démarrer, en démarrage, moteur démarré, **caractérisé en ce qu'**il comprend les étapes suivantes :
- détecter un mode de fonctionnement en veille du véhicule (1), à l'arrêt suite à l'installation du véhicule fixé sur un support de transport (3),
- détecter une vitesse du véhicule (1) nulle, relevée par les capteurs de vitesse de roue (17) du véhicule suite à ladite installation du véhicule (1) sur le support de transport (3), le capteur de vitesse (17) d'au moins une roue (9) du véhicule étant en limite d'oscillation sur une période de temps prédéfinie,
- détecter une vitesse de lacet non nulle du véhicule (1) relevée par le capteur de vitesse de lacet (13) du véhicule, correspondant à un léger mouvement relatif du véhicule (1) fixé sur son support (3), sur une période de temps prédéfinie,
- déterminer dans ces conditions un mode de transport du véhicule (1), dans lequel ledit dispositif de contrôle de trajectoire (15) commande le filtrage des informations d'au moins le capteur de vitesse de roue (17) du véhicule, et
- permettre la sortie du mode de transport du véhicule (1).

2. Procédé de détection selon la revendication 1, **caractérisé en ce que** le mode veille du véhicule (1) subsiste pendant une période de temps déterminée après arrêt du véhicule, sur le support de transport (3).

3. Procédé de détection selon l'une des revendications 1 et 2, **caractérisé en ce que** ladite période de temps prédéfinie de détection de la vitesse nulle du véhicule (1) avec au moins un capteur de vitesse de roue (17) en limite d'oscillation est de l'ordre de quelques secondes.

4. Procédé de détection selon l'une quelconque des revendications précédentes, **caractérisé en ce que** ladite période de temps prédéfinie de la vitesse de lacet non nulle du véhicule (1) est de l'ordre de la seconde.

5. Procédé de détection selon l'une quelconque des revendications précédentes, **caractérisé en ce que** lesdites périodes de temps prédéfinies de détection de la vitesse nulle du véhicule (1) où au moins un capteur de vitesse de roue (17) du véhicule est en oscillation, et de détection de la vitesse non nulle de lacet (13) du véhicule sont sensiblement identiques.

6. Dispositif de détection d'une situation de transport d'un véhicule (1) en mode veille pour la mise en oeuvre du procédé selon l'une quelconque des revendications précédentes, ce dispositif comprenant des capteurs de vitesse de roue (17) du véhicule (1), un capteur de vitesse de lacet (13) du véhicule, un dispositif de contrôle de trajectoire (15) du véhicule, une unité de traitement (21) des informations de type ordinateur de bord du véhicule apte à gérer notamment des modes de fonctionnement du véhicule, tels que véhicule endormi, en veille, prêt à démarrer, en démarrage, moteur démarré, **caractérisé en ce qu'**il comporte des moyens aptes à disposer le véhicule (1) dans un mode de transport dans lequel les informations dudit au moins un capteur de vitesse de roue (17) et en limite d'oscillation sont filtrées et à permettre le réveil du véhicule.

7. Dispositif de détection selon la revendication 6, **caractérisé en ce que** lesdits moyens aptes à disposer le véhicule (1) dans un mode de transport et à permettre le réveil du véhicule sont un élément de logiciel ajouté au logiciel du dispositif de contrôle de trajectoire (15).

8. Véhicule comprenant un dispositif de détection selon la revendication 6 ou 7.

## Patentansprüche

1. Verfahren zur Erkennung einer Transportsituation eines Fahrzeugs (1) im Parkmodus, wobei das Fahrzeug (1) eine Bahnsteuervorrichtung (15), Raddrehzahlsensoren (17) und einen Fahrzeug-Kurvengeschwindigkeitssensor (13) aufweist, die mit der Bahnsteuervorrichtung (15) des Fahrzeugs verbunden sind, eine Verarbeitungseinheit (21) der erkannten Daten des Typs Bordcomputer, die insbesondere Betriebsarten des Fahrzeugs verwaltet, wie zum Beispiel eingeschlafenes Fahrzeug, Fahrzeug im Standby, startklares Fahrzeug, Fahrzeug beim Starten, angelassener Motor, **dadurch gekennzeichnet, dass** es die folgenden Schritte aufweist:
- Erkennen eines Parkbetriebsmodus des Fahrzeugs (1) beim Stillstand im Anschluss an die Installation des Fahrzeugs auf einem Transportträger (3) befestigt,
- Erkennen einer Geschwindigkeit gleich null des Fahrzeugs (1), die von den Raddrehzahlsensoren (17) des Fahrzeugs im Anschluss an die Installation des Fahrzeugs (1) auf dem Transportträger (3) gemessen wird, wobei der Drehzahlsensor (17) mindestens eines Rades (9) des Fahrzeugs während einer vordefinierten Zeitspanne am Oszillationslimit ist,
- Erkennen einer Kurvengeschwindigkeit nicht gleich null des Fahrzeugs (1), die von dem Kurvendrehzahlsensor (13) des Fahrzeugs gemessen wird, die einer leichten relativen Bewegung des Fahrzeugs (1), das auf seinem Träger (3) befestigt ist, während einer vordefinierten Zeitspanne entspricht,
- unter diesen Bedingungen Bestimmen eines Transportmodus des Fahrzeugs (1), in dem die Bahnsteuervorrichtung (15) das Filtern der Informationen mindestens des Raddrehzahlsensors (17) des Fahrzeugs steuert, und
- Erlauben des Verlassens des Transportmodus des Fahrzeugs (1).

2. Erkennungsverfahren nach Anspruch 1, **dadurch gekennzeichnet, dass** der Parkmodus des Fahrzeugs (1) während einer bestimmten Zeitspanne nach dem Stoppen des Fahrzeugs auf dem Fahrzeugträger (3) fortdauert.

3. Erkennungsverfahren nach einem der Ansprüche 1 und 2, **dadurch gekennzeichnet, dass** die vorbestimmte Erkennungszeitspanne der Geschwindigkeit gleich null des Fahrzeugs (1) mit mindestens einem Raddrehzahlsensor (17) am Oszillationslimit in der Größenordnung von einigen Sekunden liegt.

4. Erkennungsverfahren nach einem der vorhergehenden Ansprüche, **dadurch gekennzeichnet, dass** die vorbestimmte Zeitspanne der Kurvengeschwindigkeit nicht gleich null des Fahrzeugs (1) in der Größenordnung der Sekunde liegt.

5. Erkennungsverfahren nach einem der vorhergehenden Ansprüche, **dadurch gekennzeichnet, dass** die vorbestimmten Erkennungszeitspannen der Geschwindigkeit gleich null des Fahrzeugs (1), in welchen mindestens ein Raddrehzahlsensor (17) des Fahrzeugs in Oszillation ist, und des Erkennens der Kurvengeschwindigkeit (13) nicht gleich null des Fahrzeugs im Wesentlichen identisch sind.

6. Erkennungsvorrichtung einer Transportsituation eines Fahrzeugs (1) im Parkmodus für das Umsetzen des Verfahrens nach einem der vorhergehenden Ansprüche, wobei diese Vorrichtung Raddrehzahlsensoren (17) des Fahrzeugs (1), einen Kurvengeschwindigkeitssensor (13) des Fahrzeugs, eine Bahnsteuervorrichtung (15) des Fahrzeugs, eine Verarbeitungseinheit (21) der Informationen des Typs Bordcomputer des Fahrzeugs, die angepasst ist, um insbesondere Betriebsarten des Fahrzeugs, wie zum Beispiel eingeschlafenes Fahrzeug, Fahrzeug in Standby, startklares Fahrzeug, beim Starten, angelassener Motor, zu verwalten, aufweist, **dadurch gekennzeichnet, dass** sie Mittel aufweist, die geeignet sind, um das Fahrzeug (1) in einem Transportmodus anzuordnen, in dem die Informationen des mindestens einen Raddrehzahlsensors (17) und am Oszillationslimit gefiltert werden und um das Aufwachen des Fahrzeugs zu erlauben.

7. Erkennungsvorrichtung nach Anspruch 6, **dadurch gekennzeichnet, dass** die Mittel, die geeignet sind, um das Fahrzeug (1) in einem Transportmodus anzuordnen und das Aufwachen des Fahrzeugs zu erlauben, ein Softwareelement sind, das zu der Software der Bahnsteuervorrichtung (15) hinzugefügt ist.

8. Fahrzeug, das eine Erkennungsvorrichtung nach Anspruch 6 oder 7 aufweist.

## Claims

1. Method for detecting a transport situation of a vehicle (1) in standby mode, the vehicle (1) including a course control device (15), wheel speed sensors (17) and a vehicle yaw speed sensor (13) linked to said course control device (15) of the vehicle, a detected information processing unit (21), of on-board computer type, managing in particular modes of operation of the vehicle, such as vehicle switched off, on standby, ready to start, starting or engine started, **characterized in that** it comprises the following steps:
- detecting a standby mode of operation of the vehicle (1) when stopped following the installation of the vehicle fixed on a transport carrier (3),
- detecting a zero speed of the vehicle (1), recorded by the wheel speed sensors (17) of the vehicle following said installation of the vehicle (1) on the transport carrier (3), the speed sensor (17) of at least one wheel (9) of the vehicle being at the point of oscillation, over a predefined time period,
- detecting a non-zero yaw speed of the vehicle (1), recorded by the yaw speed sensor (13) of the vehicle, corresponding to a slight relative movement of the vehicle (1) fixed on its carrier (3), over a predefined time period,
- under these conditions, determining a transport mode of the vehicle (1), in which said course control device (15) orders the filtering of the information from at least one wheel speed sensor (17) of the vehicle, and
- allowing for an exit from the transport mode of the vehicle (1).

2. Detection method according to Claim 1, **characterized in that** the standby mode of the vehicle (1) remains for a determined time period after the vehicle (1) is stopped, on the transport carrier (3).

3. Detection method according to one of Claims 1 and 2, **characterized in that** said predefined time period for detecting the zero speed of the vehicle (1) with at least one wheel speed sensor (17) at the point of oscillation is of the order of a few seconds.

4. Detection method according to any one of the preceding claims, **characterized in that** said predefined time period of the non-zero yaw speed of the vehicle (1) is of the order of one second.

5. Detection method according to any one of the preceding claims, **characterized in that** said predefined time periods for detecting the zero speed of the vehicle (1) in which at least one wheel speed sensor (17) of the vehicle is in oscillation, and for detecting the non-zero yaw speed (13) of the vehicle are substantially identical.

6. Device for detecting a transport situation of a vehicle (1) in standby mode is correctly immobilized for transport for implementing the method defined according to any one of the preceding claims, this device comprising wheel speed sensors (17) of the vehicle (1), a vehicle yaw speed sensor (13), a vehicle course control device (15), an information processing unit (21) of computer type on board the vehicle suitable for managing in particular modes of operation of the vehicle, such as vehicle switched off, on standby, ready to start, starting or engine started, **characterized in that** it comprises means suitable for placing the vehicle (1) in a transport mode in which the information from said wheel speed sensor (17) at the point of oscillation is filtered, and for enabling the vehicle (1) to be switched on again.

7. Detection device according to Claim 6, **characterized in that** said means suitable for placing the vehicle (1) in a transport mode and for enabling the vehicle to be switched on again are a software element added to the software of the course control device (15).

8. Vehicle comprising a detection device according to Claim 6 or 7.
